# FASCICULE DE BREVET EUROPEEN

(11) **EP 4 438 911 B1**
(45) Date de publication et mention de la délivrance du brevet: **13.05.2026**
(21) Numéro de dépôt: 24167539.6
(22) Date de dépôt: 28.03.2024
(51) Int. Cl.: F16B 2/24, F16B 21/06, F16B 21/07, F16B 37/08

(54) **SYSTÈME DE FIXATION À UN GOUJON FILETÉ**
BEFESTIGUNGSSYSTEM AN EINEM GEWINDEBOLZEN
THREADED STUD ATTACHMENT SYSTEM

(30) Priorité: 31.03.2023 FR 2303223
(43) Date de publication de la demande: 02.10.2024
(73) Titulaire: Lisi Automotive Rapid, 95650 Puiseux-Pontoise (FR)
(72) Inventeur: OLIVIER, William, 92400 Courbevoie (FR)
(74) Mandataire: Weinstein Services & Conseils

(56) Documents cités:
- FR-A1- 3 091 909
- US-A1- 2022 379 415

## Description

### DOMAINE TECHNIQUE

L'invention s'inscrit dans le domaine des fixations, et concerne plus particulièrement un système de fixation à un goujon fileté, particulièrement adapté pour monter un panneau sur une carrosserie automobile.

### ART ANTERIEUR ET INCONVENIENTS DE L'ART ANTERIEUR

De manière connue, la fixation de panneau sur des châssis de type automobile est réalisée en positionnant le panneau contre le châssis, lequel châssis comprend des goujons filetés en saillie qui passent au travers d'orifices ménagés dans le panneau, puis en y vissant des boulons pour fixer le panneau contre le châssis sans qu'aucun jeu mécanique ne subsiste.

Ces fixations par vissage sont souvent fastidieuses pour un opérateur, en plus de prendre beaucoup de temps.

Il est connu des agrafes monoblocs qui peuvent être encliquetées sur un goujon fileté. La fixation par rotation d'un boulon est donc évitée. Cependant, ces agrafes sont adaptées à un type particulier de goujon fileté, et l'opérateur doit exercer une force importante sur l'agrafe pour la fixer et la verrouiller autour du goujon.

Il est également connu de la publication FR3091909 une pièce de fixation à un goujon fileté faisant saillie d'une embase comprenant une pièce de fixation munie de plusieurs griffes courbées dont les extrémités sont destinée à s'insérer dans le filetage d'un goujon, et une pièce d'habillage destinée à recouvrir la pièce de fixation en exerçant une force sur les griffes : cette force déforme les griffes qui vont consolider l'encastrement des extrémités des griffes dans le filetage et générer un effort de tension contre l'embase.

Cependant, la force de tension générée par la pièce de fixation contre l'embase après fixation dépend grandement de l'effort d'installation fourni par l'opérateur.

### OBJECTIF DE L'INVENTION

L'invention vise donc à proposer un système de fixation à un goujon fileté faisant saillie d'une embase dont l'installation est réalisée de manière ergonomique et reproductible.

### EXPOSE DE L'INVENTION

A cet effet, l'invention vise un système de fixation à un goujon fileté faisant saillie d'une embase, par exemple un châssis de véhicule automobile, selon la revendication 1.

Le système de fixation peut également comporter les caractéristiques optionnelles suivantes considérées isolément ou selon toutes les combinaisons techniques possibles :
- La pièce d'armement comprend des moyens de verrouillage en position contrainte des languettes d'encastrement de la pièce de fixation.
- Le système de fixation est actionnable entre la position de mise en place autour du goujon dans laquelle la pièce d'armement maintient les quatre languettes de la pièce de fixation dans leur position contrainte, et la position de fixation sous tension au goujon.
- La pièce d'armement comprend des moyens de liaison à la pièce de fixation lorsque les languettes d'encastrement et les languettes de tension de la pièce de fixation sont en position libre, le système de fixation étant dans sa position de fixation sous tension au goujon.
- Chaque languette d'encastrement de la pièce de fixation comprend une fenêtre de coopération avec la pièce d'armement par ses moyens de liaison.
- La fenêtre est délimitée par une portion supérieure de coopération avec la pièce d'armement par ses moyens de verrouillage en position contrainte de la languette d'encastrement considérée.
- La fenêtre est délimitée par une portion inférieure opposée de laquelle fait saillie la griffe considérée.
- L'extrémité libre de chaque griffe est concave.
- Chaque griffe comprend un corps principal plan et en ce que l'extrémité libre de chaque griffe est inclinée par rapport à un plan d'extension du corps de la griffe, les sens d'inclinaison des extrémités libres des deux griffes respectives étant opposés.
- Chaque languette de tension de la pièce de fixation comprend un corps principal de déformation de la base et une portion d'extrémité libre de coopération avec la pièce de fixation :
   a) par les moyens de verrouillage prévu sur la pièce d'armement lorsque la languette de tension est en position contrainte et,
   b) par les moyens de liaison prévu sur la pièce d'armement lorsque la languette de tension est dans sa position libre.
- La base est incurvée lorsque les languettes de tension sont dans leur position libre.
- Les moyens de liaison et les moyens de verrouillage des languettes d'encastrement sont formés par deux butées opposées en saillie comprenant chacune :
   a) une surface de retenue de la languette d'encastrement considérée dans sa position libre formant moyens de liaison, et
   b) un épaulement de verrouillage ménagé sur une surface inclinée de réception de la portion supérieure de la languette d'encastrement considérée dans sa position contrainte.
- Les moyens de liaison et les moyens de verrouillage des languettes de tension sont formés par deux organes évidés opposés comprenant chacun :
   a) un logement de verrouillage de la portion d'extrémité libre de la languette de tension considérée dans sa position contrainte, et
   b) une portion rainurée formant moyens de liaison et comprenant une rainure de logement du corps principal de la languette de tension et deux bords de retenue de la portion d'extrémité libre de la languette de tension disposés de part et d'autre de la rainure lorsque ladite languette de tension est dans sa position libre.
- Le logement de verrouillage ménagé dans chaque organe évidé de la pièce d'armement est délimité par une surface inclinée de réception de la portion d'extrémité libre de la languette de tension.
- Le système de fixation comprend un élément de liaison à un panneau destiné à être fixé à l'embase, lequel élément comprend un corps principal, des pattes de fixation au panneau et un logement des pièces de fixation et d'armement reliées entre elles.
- La pièce de fixation comprend des jambes de liaison à l'élément de liaison, au moins une partie d'extrémité de chaque jambe de liaison étant en vis-à-vis d'une face inférieure du corps principal.

L'invention vise également un procédé d'installation d'un panneau contre une embase avec au moins un système de fixation tel que décrit précédemment à un goujon fileté faisant saillie de ladite embase, lequel procédé comprend les étapes successives de :
a) Mise en place du panneau contre l'embase, le goujon traversant le panneau par un orifice ménagé dans ledit panneau ;
b) Mise en place du système de fixation autour du goujon, les languettes de la pièce de fixation étant en position contrainte et la base étant plane ;
c) Translation du système de fixation dans sa position contrainte le long du goujon fileté jusqu'à mise en contact de la base contre le panneau ;
d) Déplacement en translation de la pièce d'armement en direction du panneau par rapport à la pièce de fixation en appui de contact contre le panneau, les languettes étant dans leur position contrainte ;
e) Libération concomitante des languettes et actionnement de la pièce de fixation vers sa position libre de fixation autour du goujon, durant laquelle les extrémités libres des griffes s'engagent dans le filetage du goujon et durant laquelle la base passe de sa position plane à sa position non plane en exerçant une contrainte contre le panneau dirigée perpendiculairement à ladite base pour supprimer tout jeu mécanique entre la pièce de fixation, le panneau et l'embase.

### PRESENTATION DES FIGURES

D'autres caractéristiques et avantages de l'invention ressortiront clairement de la description qui en est donnée ci-dessous, à titre indicatif et nullement limitatif, en référence aux figures annexées :
[Fig. 1] La figure 1 représente une vue en perspective du système de fixation de l'invention, lequel système est armé et prémonté sur un panneau ;
[Fig. 2] La figure 2 représente une vue en perspective du système de fixation de l'invention, lequel système est libre ;
[Fig. 3] La figure 3 représente une vue en perspective d'une pièce de fixation du système de fixation de la figure 1, laquelle pièce est en position libre non contrainte ;
[Fig. 4] La figure 4 illustre une vue de côté de la pièce de fixation de la figure 3 en position libre ;
[Fig. 5] La figure 5 illustre une vue de côté de la pièce de fixation de la figure 3 en position contrainte.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

L'invention concerne un système de fixation 1 par encliquetage à un goujon fileté 34, et trouve son application dans le domaine de la fixation de pièces industrielles, et notamment dans le domaine de la fixation des accessoires à un châssis 42 ou une carrosserie automobile.

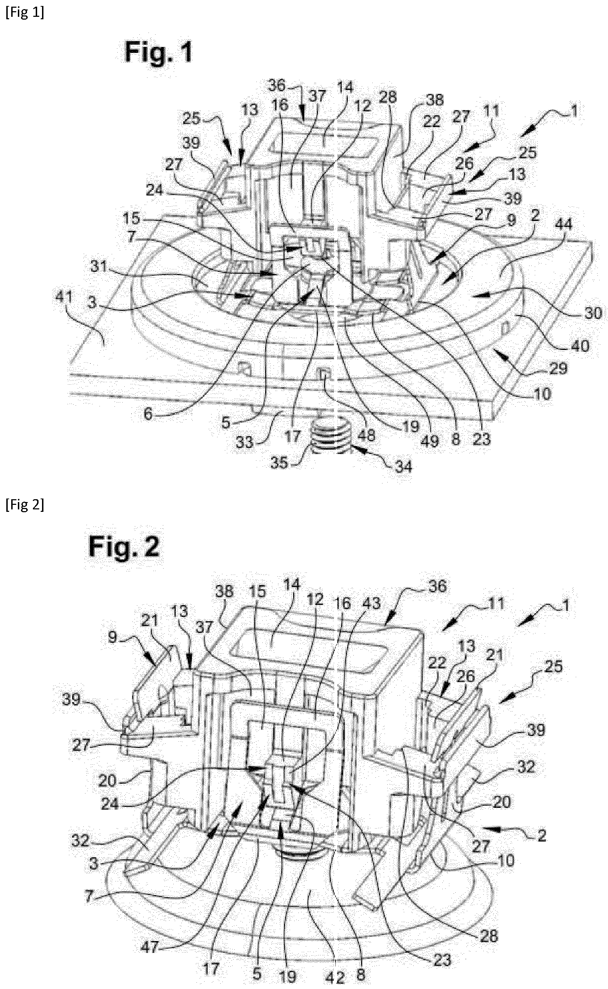

En référence aux figures 1 à 5, le système de fixation 1 de l'invention comprend une pièce de fixation 2 au goujon fileté 34 et une pièce d'armement 11 de ladite pièce de fixation 2.

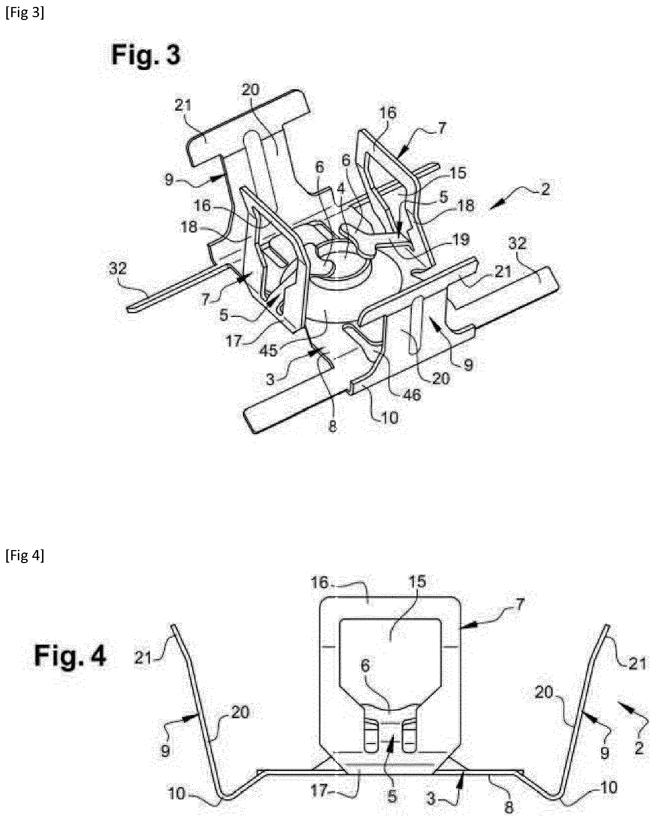

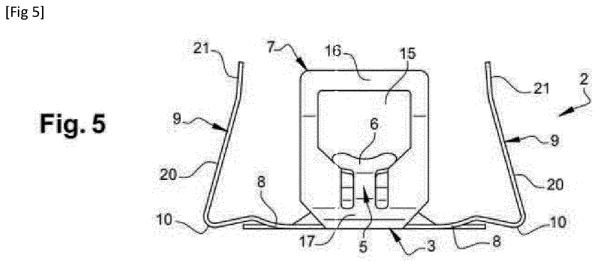

La pièce de fixation 2, réalisée en matériau métallique, typiquement en acier, va maintenant être décrite. Cette pièce est particulièrement visible en position libre non contrainte sur les figures 2 et 4, et en position contrainte armée sur la figure 5.

La pièce de fixation 2 s'étend selon un axe longitudinal et comprend une base 3 de forme générale rectangulaire, laquelle base 3 comprend une face interne et une face opposée externe. La base 3 comprend en son centre une portion centrale tronconique 45 faisant saillie de la face interne de la base 3 et qui comporte en son centre un orifice cylindrique traversant 4 au travers duquel le goujon fileté 34 est prévu pour y être logé. L'orifice traversant 4 est de diamètre supérieur au diamètre du goujon fileté 34.

La pièce de fixation 2 comprend en outre deux languettes d'encastrement opposées 7, faisant saillie de deux bords longitudinaux opposés 8 de la face interne de la base 3. Ces languettes d'encastrement 7 sont élastiquement déformables et sont actionnables entre une position libre d'encastrement et une position contrainte - ou armée. Le passage de la position libre à la position contrainte se fait par écartement des extrémités distales desdites languettes d'encastrement 7.

Chaque languette d'encastrement 7 comprend une fenêtre 15 délimitée par une portion inférieure 17 solidaire du bord considéré 8 de la base 3, et une portion supérieure opposée 16. La portion supérieure 16 s'étend par ailleurs dans un plan sécant par rapport à un plan d'extension du reste de la languette d'encastrement 7.

La pièce de fixation 2 comprend également deux griffes opposées 5 comprenant chacune un corps principal plan 19 qui s'étend depuis la portion inférieure 17 de la languette d'encastrement considérée 7, et une extrémité libre distale 6 de coopération avec le filetage 35 du goujon 34. Les extrémités libres 6 des deux griffes respectives 5 sont en regard l'une de l'autre, de part et d'autre de l'orifice traversant 4. Pour assurer une plus grande surface de coopération de l'extrémité libre 6 de chaque griffe 5 avec le filetage 35 du goujon 34, ladite extrémité libre 6 de chaque griffe 5 présente une forme concave. En d'autres termes, la forme concave de l'extrémité libre 6 de chaque griffe 5 permet d'assurer un contact linéique entre ladite extrémité libre 6 et le goujon fileté 34.

En outre, l'extrémité libre 6 de chaque griffe 5 présente la même orientation que celle du filetage 35 du goujon 34. Par exemple, si le goujon présente un filet couché, la corps principal 19 et l'extrémité libre 6 de chaque griffe 5 s'étend dans un même plan. Si le goujon 34 présente un filetage triangulaire 35, comme celui représenté sur la figure 1, alors l'extrémité libre 6 de la griffe 5 est inclinée par rapport à un plan d'extension de la griffe 5, de manière à permettre une insertion de la totalité de l'extrémité libre 6 de la griffe 5 dans le filetage 35 du goujon 34. Dans le cas d'une pièce de fixation 2 adaptée à un filetage triangulaire 35, les sens d'inclinaison des extrémités libres 6 des deux griffes respectives 5 sont opposés.

Les griffes 5 sont mécaniquement reliées aux languettes d'encastrement 7. Ainsi, lorsque les languettes d'encastrement 7 sont dans leur position libre, les griffes 5 sont configurées pour s'encastrer dans le filetage 35 du goujon 34. A l'inverse, lorsque les languettes d'encastrement 7 sont dans leur position contrainte, les griffes 5 sont dans une position de dégagement de leurs extrémités libres 6 du filetage 35 du goujon 34. En effet, le passage de la position libre vers la position contrainte des languettes d'encastrement 7 provoque l'écartement l'une de l'autre des extrémités libres distales 6 des griffes 5 en regard.

La pièce de fixation 2 comprend également deux languettes de tension opposées 9, faisant saillie de deux bords transversaux opposés 10 de la face interne de la base 3. Les languettes de tension 9 sont élastiquement déformables par rapprochement des extrémités libres distales 21 desdites languettes de tension 9. Elles sont ainsi actionnables entre une position libre dans laquelle la base 3 de la pièce de fixation 2 est non plane et une position contrainte - ou armée - dans laquelle la base 3 est plane (figure 5).

Plus particulièrement, lorsque les languettes de tension 9 sont dans leur position libre, la face externe opposée de la base 3 de la pièce de fixation 2 présente une profil incurvé concave. Alternativement, lorsque les languettes de tension 9 sont dans leur position libre, la face externe de la base 3 présente un profil en forme de ligne brisée (voir la figure 4), avec une zone centrale plane et deux zones extrémales inclinées, l'angle entre la zone centrale et la zone extrémale considérée étant inférieure à 180° au niveau de la face externe de la base 3 de la pièce de fixation 2.

De manière à ajuster et limiter la force nécessaire au déplacement des languettes de tension 9 de leur position libre vers leur position armée, des rainures traversantes en U 46 peuvent être prévues dans la base 3 de la pièce de fixation 2.

Chaque languette de tension 9 présente en outre la forme d'un T et comprend un corps principal 20 faisant saillie de la base 3 de la pièce de fixation 2 et une portion d'extrémité libre 21 formant l'extrémité distale qui s'étend perpendiculairement audit corps principal 20, c'est-à-dire parallèlement à l'axe longitudinal. La portion d'extrémité libre 21 s'étend par ailleurs dans un plan sécant par rapport à un plan d'extension du reste de la languette de tension 9.

Enfin, la pièce de fixation 2 comprend quatre jambes transversales 32 de liaison faisant saillie des sommets de la base 3, perpendiculairement aux bords longitudinaux opposés 8 de ladite base 3.

La pièce d'armement 11, réalisée préférentiellement en matériau plastique ou composite et assemblée à la pièce de fixation, va maintenant être décrite.

La pièce d'armement 11 est au moins en partie logée dans un espace délimité par les quatre languettes 7, 9 de la pièce de fixation 2, et s'étend selon un second axe longitudinal qui coïncide avec l'axe longitudinal de la pièce de fixation 2.

La pièce d'armement 11 comprend un corps principal 36 à section rectangulaire dans lequel est ménagé un orifice traversant 14 de réception du goujon fileté 34. L'orifice 14 représenté sur les figures 1 et 2 présente en section une forme rectangulaire, mais toute forme de section est envisageable sans sortir du cadre de l'invention pourvu que l'orifice 14 permette le logement du goujon fileté 34. Les deux orifices 4, 14 respectivement de la pièce de fixation 2 et de la pièce d'armement 11 s'étendent selon le même axe perpendiculaire à l'axe longitudinal et à un axe transversal du système de fixation, lequel axe sera dénommé dans la suite axe vertical.

Le corps principal 36 de la pièce d'armement 11 comprend une face supérieure, une face inférieure opposée en regard de la base de la pièce de fixation, et quatre faces latérales 37, 38 dont deux faces latérales longitudinales 37 et deux faces latérales transversales 38.

La pièce d'armement 11 comprend des moyens de verrouillage en positon contrainte 23 des languettes d'encastrement 7, des moyens de verrouillage en position contrainte 22 des languettes de tension 9, et des moyens de liaison 12, 13 à la pièce de fixation 2 lorsque les languettes d'encastrement 7 et de tension 9 sont dans leur position libre.

En référence à la figure 2, la structure de la pièce d'armement 11 formant les moyens de liaison 12, 13 et de verrouillage 22, 23 vont être décrits.

La pièce d'armement 11 comprend deux organes évidés opposés 25 respectivement solidaires des deux parois latérales transversales opposées 38 du corps principal 36 de la pièce d'armement 11. Chaque organe évidé 25 comprend une portion rainurée 13 - qui forme les moyens de liaison de la pièce de fixation 2 lorsque les languettes de tension 9 et d'encastrement 7 sont en position libre - comportant une rainure longitudinale de logement 26 du corps principal 20 de la languette de tension considérée 9 et deux bords longitudinaux de retenue 27 de la portion d'extrémité libre 21 de la languette de tension 9, lesquels bords longitudinaux de retenue 27 s'étendent de part et d'autre de la rainure de logement 26.

Les bords longitudinaux de retenue 27 font saillie de la paroi latérale transversale considérée 38 du corps principal 36 de la pièce d'armement 11. La largeur de la rainure de logement 26 est supérieure ou égale à la largeur du corps principal 20 de la languette de tension considérée 9, et inférieure à la largeur (c'est-à-dire une dimension perpendiculaire à l'axe longitudinal) de la portion d'extrémité libre 21 de ladite languette de tension 9. Par ailleurs, les bords longitudinaux de retenue 27 s'étendent obliquement par rapport à la face latérale transversale considérée 38 du corps principal 36 de la pièce d'armement 11 et en direction de la face inférieure dudit corps principal 36. Par obliquement, on entend une direction d'extension des bords de retenue 27 qui n'est ni parallèle, ni perpendiculaire à la face latérale transversale considérée 38. Enfin, chaque portion rainurée 13 comprend un bord transversal 39 formant l'extrémité distale de l'organe évidé 25.

Ainsi, chaque rainure de logement 26 est délimitée par la paroi latérale transversale considérée 38 du corps principal 36 de la pièce d'armement 11, par les deux bords longitudinaux de retenue 27 et par le bord transversal d'extrémité distale 39.

Chaque organe évidé 25 comprend en outre un logement 22 de la portion d'extrémité libre 21 de la languette de tension 9 - qui forme les moyens de verrouillage en position contrainte de la languette de tension considérée 9 - qui s'étend entre la paroi latérale transversale considérée 38 et la rainure de logement 26 de la portion rainurée 13. Ce logement de verrouillage 22 de la portion d'extrémité libre 21 de la languette de tension 9 s'étend selon une direction transversale et présente une largeur supérieure ou égale à la dimension transversale de la partie d'extrémité libre 21 de la languette de tension 9. En outre, chaque logement de verrouillage 22 est délimité par deux surfaces inclinées de réception 28 de la portion d'extrémité libre 21 de la languette de tension 9, ménagées dans les parois des bords longitudinaux de retenue respectifs 27 de part et d'autre de la rainure de logement 26. Ainsi, le contact surfacique entre l'extrémité libre 21 de la languette de tension considérée 9 et les surfaces inclinées de réception 28 est maximisé, ce qui améliore le verrouillage en position contrainte de la languette de tension 9. Par ailleurs, ces surfaces inclinées 28 s'étendent chacune jusqu'à deux épaulements respectifs (non représenté) ménagés dans les parois des bords longitudinaux de retenue respectifs 27 de part et d'autre de la rainure de logement 26. Ces épaulements permettent de retenir la pièce de fixation (2) armée dans la pièce d'armement (11).

La pièce d'armement 11 comprend en outre deux butées opposées 24 qui font saillie des faces latérales longitudinales opposées 37 du corps principal 36 de ladite pièce d'armement 11. Ces butées 24 forment des becs de verrouillage des languettes d'encastrement 7 dans leur position contrainte.

Chaque butée 24 comprend une surface supérieure de liaison 12 qui s'étend perpendiculairement depuis la face latérale longitudinale considérée 37 du corps principal 36 de la pièce d'armement 11. Cette surface supérieure forme les moyens de liaison de la pièce de fixation 2 lorsque les languettes de tension 9 et d'encastrement 7 sont en position libre.

La butée 24 comprend également une surface de verrouillage inclinée 47 en direction de la face inférieure du corps principal 36 de la pièce d'armement 11 et qui s'étend depuis la face supérieure 12 de la butée 24, si bien que la butée présente un profil triangulaire.

Un épaulement de verrouillage 23 est ménagé dans cette surface inclinée 47 et qui forme les moyens de verrouillage de la languette d'encastrement considérée 7 dans sa position contrainte. La surface latérale 43 de l'épaulement 23 est parallèle à la portion supérieure 16 de la languette d'encastrement considérée 7 en position contrainte, si bien que le contact surfacique entre la portion supérieure 16 de la languette d'encastrement considérée 7 et la surface latérale 43 de l'épaulement 23 est maximisé, ce qui améliore le verrouillage en position contrainte de la languette d'encastrement 7.

La fixation à un goujon fileté 34 du système de fixation 1 va maintenant être décrite.

Avant utilisation, le système de fixation 1 est armé, c'est-à-dire que les languettes d'encastrement 7 et de tension 8 sont dans leur position armée, autrement dit sous contrainte, comme représenté sur la figure 1.

Les deux languettes d'encastrement 7 sont maintenues en contrainte par les butées 24 - ou becs de verrouillage - de la pièce d'armement 11 : la portion supérieure de coopération 16 de chaque languette d'encastrement 7 coopère avec l'épaulement 23 de la butée considérée 24 de la pièce d'armement 11. Cela a pour effet d'écarter selon une direction transversale les languettes d'encastrement 7, et concomitamment d'écarter les extrémités libres distales 6 des deux griffes 5 de sorte qu'elles soient désengagées du filetage 35 du goujon 34. De la sorte la pièce de fixation 2, lorsque les languettes d'encastrement 7 sont armées, peut glisser sans résistance le long du goujon fileté 34.

Les deux languettes de tension 9 sont également maintenues en contrainte en étant logées dans les logements de verrouillage 22 des organes évidés 25. La pièce d'armement 11 tend dans ces conditions à rapprocher entre elles les extrémités libres 21 des languettes de tension 9, ce qui a pour effet de déformer la base 3 de la pièce de fixation 2, et plus précisément d'aplanir ladite base 3.

Lorsqu'un opérateur installe le système de fixation 1 autour du goujon 34, il saisit la pièce d'armement 11 et introduit le goujon 34 dans les deux orifices traversant 4, 14 respectivement de la pièce de fixation 2 et de la pièce d'armement 11.

De manière avantageuse, la pièce d'armement 11 comprend deux pattes souples opposées (non représentées) qui font saillie de la face interne de l'orifice 14 du corps principal 36 de ladite pièce d'armement 11 en s'étendant chacune jusqu'à une extrémité libre distale, lesquelles extrémités distales sont en regard l'une de l'autre. La distance entre les deux pattes souples est inférieure au diamètre du goujon 34, si bien que lorsque le goujon 34 est inséré dans les orifices 4, 14 du système d'armement 1 en position armé, les griffes 5 de la pièce de fixation 2 sont désengagées du filetage 35 du goujon 34 mais les pattes souples de la pièce d'armement 11 sont en appui de contact contre le goujon 34, ce qui assure le maintien du système de fixation 1 autour du goujon 34. La force de résistance exercée par ces pattes souples est faible, c'est-à-dire inférieure à 20 newtons, ce qui offre le double avantage de permettre une pré-installation du système de fixation 1 autour du goujon 34 avant fixation définitive, tout en permettant à l'opérateur de retirer du goujon 34 le système de fixation 1 toujours armé.

Pour installer le système de fixation 1, l'opérateur déplace ensuite le système de fixation 1 autour du goujon 34 jusqu'à ce que la face externe de la base 3 de la pièce de fixation 2 venir en appui de contact contre la surface dont fait saillie le goujon 34, par exemple le châssis 42. Alternativement, lorsque l'opération vise à plaquer un panneau 41 contre l'embase 42, l'opérateur déplace le système de fixation 1 autour du goujon 34 jusqu'à ce que la face externe de la base 3 de la pièce de fixation 2 venir en appui de contact contre le panneau 41.

Par la force de pression exercée par l'opérateur sur la face supérieure de la pièce d'armement 11, cette dernière poursuit son déplacement en translation vers le châssis 42 tandis que la pièce de fixation 2 demeure immobile, la base étant en appui contre le panneau : il y a donc un mouvement de translation relatif de la pièce d'armement 11 par rapport à la pièce de fixation 2. L'effort nécessaire devant être exercé par l'opérateur pour assurer la translation de la pièce d'armement 11 par rapport à la pièce de fixation 2 est relativement faible, comprise entre 30 et 50 newtons.

Ce mouvement relatif provoque, concomitamment, d'une part le déplacement des parties d'extrémité distales 21 des languettes de tension 9 hors des logements de verrouillage 22, et d'autre part le désengagement des portions supérieures 16 des languettes d'encastrement 7 hors des épaulements 23 ménagés dans les butées de verrouillage 24 de la pièce de d'armement 11.

Les quatre languettes 7, 9 de la pièce de fixation 2 passent alors concomitamment de leur position armée vers leur position libre : le corps principal 20 de chaque languette de tension 9 se retrouve dans la rainure de logement 26 de la pièce d'armement 11, tandis que la portion supérieure 16 de chaque languette d'encastrement 7 vient en regard de la surface supérieure de liaison 12 de la butée 24. Ce passage de la position contrainte vers la position libre des languettes 7, 9 est brutale - quelques centièmes de secondes - et produit un son caractéristique parfaitement reconnaissable par l'opérateur installant le système de fixation 1, qui lui indique que la pièce de fixation 2 a bien été actionnée vers sa position libre et qu'elle est en place autour du goujon fileté 34.

En outre, la partie supérieure 21 de chaque languette de tension 9 est retenue dans la rainure de logement 26 par l'extrémité distale 39 de la portion rainurée 13 tandis que les butées 24 de la pièce d'armement 11 sont logées dans les fenêtres 15 des languettes d'encastrement 7, ce qui assure la liaison entre la pièce de fixation 2 à la pièce d'armement 11 tout en assurant le libre mouvement de la pièce d'armement 11 par rapport à la pièce de fixation 2. Le système de fixation 1 est alors dans une position de fixation sous tension au goujon 34, comme représenté sur la figure 2.

En effet, lorsque les quatre languettes 7, 9 passent de la position armée vers la position libre, les extrémités libres 6 des griffes 5 de la pièce de fixation 2 s'engagent dans le filetage 35 du goujon 34 tandis que la base 3 de la pièce de fixation 2 reprend sa position libre non plane en exerçant une force de plaquage contre le châssis 42 et le panneau 41. Cette force exercée, qui est supérieure ou égale à 50 newtons, permet de supprimer tout jeu mécanique entre le panneau 41, le châssis 42 et le système de fixation 2. Par ailleurs, la force exercée par la pièce de fixation 2 contre le châssis 42 et le panneau 41 dépend du matériau de la pièce de fixation 2 et de la forme de ladite pièce de fixation 2. Ainsi, si toutes les pièces de fixation 2 de plusieurs systèmes de fixation 1 sont identiques, alors les forces exercées par ces pièces de fixation 2 contre le panneau 41 et le châssis 42 dont font saillie les goujons 34 sont toutes identiques, ce qui assure une installation reproductible des systèmes de fixation 1 autour des goujons 34.

Le système de fixation 1 installé autour du goujon 34 est prévu pour résister à l'arrachement, en particulier à une force d'éloignement dirigée en sens inverse de la force de plaquage de la pièce de fixation 1 contre le châssis 42. La résistance à l'arrachement de la pièce de fixation 1 fixée au goujon filetée 34 est au moins égale à 600 newtons.

Avantageusement, le système de fixation 1 absorbe les contraintes d'éloignement par déformation de la pièce de fixation 2. Cette déformation de la pièce de fixation 2 tend à rapprocher entre elles les extrémités distales 6 des griffes de coopération 5, provoquant une augmentation de la force d'appui desdites extrémités distales 6 des griffes 5 contre le filetage 35 du goujon 34. Ainsi, une force exercée sur le système de fixation 1 visant à éloigner ledit système de fixation 1 du châssis 42 tendra au contraire à renforcer la fixation du système de fixation 1 autour du goujon fileté 34, pourvu que cette force d'éloignement demeure inférieure à la force nécessaire à l'arrachement.

En tout état de cause, le système de fixation 1 installé autour du goujon 34 est facilement démontable, notamment sur un goujon 34 à filetage triangulaire 35, car il suffit à l'opérateur de dévisser de manière classique le système de fixation 1 à la manière d'un écrou classique.

Enfin, pour permettre le prémontage du système de fixation 1 sur un panneau 41, ledit système de fixation 1 comprend une pièce de liaison 30 audit panneau 41 qui va maintenant être décrite, principalement en référence à la figure 1.

Cette pièce de liaison 30 comprend une paroi annulaire 44 dont le diamètre interne permet le passage de la pièce d'armement 11 et des languettes d'encastrement 7 et de tension 9 de la pièce de fixation 2, mais pas des jambes de liaison 32 qui sont en vis-à-vis d'une face inférieure de cette paroi annulaire 44.

La pièce de liaison 30 comprend en outre une paroi cylindrique 40 qui fait saillie de la face inférieure de la paroi annulaire 44, et une pluralité de pattes d'encliquetage déformables 33 qui s'étendent depuis la bordure libre de la paroi cylindrique 40.

Cette pièce de liaison 30 permet de prémonter le système de fixation 1 sur le panneau 41 en plaçant contre le panneau 41 les pièces de fixation 2 et d'armement 11 assemblées entre elles, de sorte que les orifices 4, 14 des pièces de fixation 2 et d'armement 11 du système de fixation 1 soient en vis-à-vis d'un orifice traversant 49 ménagé dans le panneau 41. La pièce de liaison 30 est alors fixée au panneau 41 par encliquetage des pattes d'encliquetage 33 dans des évidements traversants prévus 48 à cet effet et ménagés dans le panneau 41 (figure 1).

Selon une alternative de réalisation non représentée, la pièce de liaison 30 comprend deux pattes opposées qui s'étendent depuis la bordure libre de la paroi cylindrique 40 perpendiculairement à cette dernière, lesquelles pattes permettent un montage en glissière dans une rainure ménagée dans le panneau 41.

L'assemblage entre les pièces de fixation 2 et d'armement 11 sont ainsi retenues par la pièce de liaison 30, et la distance séparant deux jambes de liaison opposées 32 de la pièce de fixation 2 étant inférieure au diamètre interne de l'orifice 31 de la pièce de liaison 30, il existe un jeu de déplacement de cet assemblage pour faciliter le positionnement du système de fixation 1 en regard du goujon 34 lors de l'installation.

De manière particulièrement avantageuse, l'invention prévoit un panneau de fixation 41 à une pluralité de goujons 34 faisant saillie d'un châssis 42 de véhicule, lequel panneau 41 comprend une pluralité de systèmes de fixation prémontés 1. Le montage d'une pluralité de systèmes de fixation 1 de manière concomitante est alors rendu possible. La fixation aux goujons 34 est non seulement plus aisée, reproductible, mais également plus rapide.

## Revendications

1. Système de fixation (1) à un goujon fileté (34) faisant saillie d'une embase, par exemple un châssis de véhicule automobile, comprenant :
a) une pièce de fixation (2) comprenant :
i) une base (3) munie d'un orifice traversant (4) destiné à recevoir le goujon fileté (34),
ii) deux griffes opposées (5) comprenant chacune une extrémité libre (6) de coopération avec le filetage (35) du goujon (34), lesquelles extrémités libres (6) des deux griffes (5) sont en regard l'une de l'autre de part et d'autre de l'orifice (4), et
iii) deux languettes d'encastrement (7) faisant saillie de deux premiers bords opposés (8) de la base (3) et mécaniquement reliées aux deux griffes de coopération respectives (5), lesquelles languettes d'encastrement (7) sont élastiquement déformables entre une position libre d'encastrement des extrémités libres (6) des griffes (5) dans le filetage (35) du goujon (34) et une position contrainte d'écartement desdites extrémités libres (6) des griffes (5) du filetage (35) du goujon (34).
iv) deux languettes de tension (9) faisant saillie de deux seconds bords opposés (10) de la base distincts des premiers bords (8), lesquelles languettes de tension (9) sont élastiquement déformables entre une position libre dans laquelle la base (3) est non plane et une position contrainte dans laquelle la base (3) est plane ;
b) une pièce d'armement (11) de la pièce de fixation (2) comprenant :
i) un orifice (14) destiné à recevoir le goujon fileté (34), et
ii) des moyens de verrouillage en position contrainte (22) des languettes de tension (9) de la pièce de fixation (2) ;
lequel système de fixation (1) est actionnable entre une position de mise en place autour du goujon (34) dans laquelle la pièce d'armement (11) maintient les languettes (9) de la pièce de fixation (2) dans leur position contrainte, et une position de fixation sous tension au goujon (34).

2. Système selon la revendication précédente, **caractérisé en ce que** :
la pièce d'armement (11) comprend des moyens de verrouillage en position contrainte (23) des languettes d'encastrement (7) de la pièce de fixation (2) ;
lequel système de fixation (1) est actionnable entre la position de mise en place autour du goujon (34) dans laquelle la pièce d'armement (11) maintient les quatre languettes (7, 9) de la pièce de fixation (2) dans leur position contrainte, et la position de fixation sous tension au goujon (34).

3. Système selon la revendication précédente, **caractérisé en ce que** la pièce d'armement (11) comprend des moyens de liaison (12, 13) à la pièce de fixation (2) lorsque les languettes d'encastrement (7) et les languettes de tension (9) de la pièce de fixation (2) sont en position libre, le système de fixation (1) étant dans sa position de fixation sous tension au goujon (34).

4. Système (1) selon la revendication 2 ou 3, **caractérisé en ce que** chaque languette d'encastrement (7) de la pièce de fixation (2) comprend une fenêtre (15) de coopération avec la pièce d'armement (11) par ses moyens de liaison (12).

5. Système (1) selon la revendication précédente, **caractérisé en ce que** la fenêtre (15) est délimitée par une portion supérieure (16) de coopération avec la pièce d'armement (11) par ses moyens de verrouillage en position contrainte (23) de la languette d'encastrement considérée (7).

6. Système (1) selon la revendication 4 ou 5, **caractérisé en ce que** la fenêtre (15) est délimitée par une portion inférieure (17) opposée de laquelle fait saillie la griffe considérée (5).

7. Système (1) selon l'une quelconque des revendications 1 à 6, **caractérisé en ce que** l'extrémité libre (6) de chaque griffe (5) est concave.

8. Système (1) selon l'une quelconque des revendications précédentes, **caractérisé en ce que** chaque griffe (5) comprend un corps principal plan (19) et **en ce que** l'extrémité libre (6) de chaque griffe (5) est inclinée par rapport à un plan d'extension du corps (19) de la griffe (5), les sens d'inclinaison des extrémités libres (6) des deux griffes respectives (5) étant opposés.

9. Système (1) selon l'une quelconque des revendications précédentes, **caractérisé en ce que** chaque languette de tension (9) de la pièce de fixation (2) comprend un corps principal (20) de déformation de la base (3) et une portion d'extrémité libre (21) de coopération avec la pièce de fixation (11) :
a) par les moyens de verrouillage (22) prévu sur la pièce d'armement (11) lorsque la languette de tension (9) est en position contrainte et,
b) par les moyens de liaison (13) prévu sur la pièce d'armement (11) lorsque la languette de tension (9) est dans sa position libre.

10. Système (1) selon l'une quelconque des revendications précédentes, **caractérisé en ce que** la base (3) est incurvée lorsque les languettes de tension (9) sont dans leur position libre.

11. Système (1) selon l'une quelconque des revendications 3 à 10, **caractérisé en ce que** :
a) Les moyens de liaison (12) et les moyens de verrouillage (23) des languettes d'encastrement (7) sont formés par deux butées opposées en saillie (24) comprenant chacune :
i) une surface de retenue (12) de la languette d'encastrement considérée (7) dans sa position libre formant moyens de liaison (12), et
ii) un épaulement de verrouillage (23) ménagé sur une surface inclinée de réception de la portion supérieure (16) de la languette d'encastrement considérée (7) dans sa position contrainte ;
b) Les moyens de liaison (13) et les moyens de verrouillage (22) des languettes de tension (9) sont formés par deux organes évidés opposés (25) comprenant chacun :
i) un logement de verrouillage (22) de la portion d'extrémité libre de la languette de tension considérée (9) dans sa position contrainte, et
ii) une portion rainurée formant moyens de liaison (13) et comprenant une rainure de logement (26) du corps principal (20) de la languette de tension (9) et deux bords de retenue (27) de la portion d'extrémité libre (21) de la languette de tension (9) disposés de part et d'autre de la rainure (26) lorsque ladite languette de tension (9) est dans sa position libre.

12. Système (1) selon la revendication précédente, **caractérisé en ce que** le logement de verrouillage (22) ménagé dans chaque organe évidé (25) de la pièce d'armement (11) est délimité par une surface inclinée de réception (28) de la portion d'extrémité libre (21) de la languette de tension (9).

13. Système (1) selon l'une quelconque des revendications précédentes, **caractérisé en ce qu'**il comprend un élément de liaison (29) à un panneau (41) destiné à être fixé à l'embase, lequel élément (29) comprend un corps principal (30), des pattes de fixation (33) au panneau (41) et un logement (31) des pièces de fixation (2) et d'armement (11) reliées entre elles.

14. Système (1) selon la revendication précédente, **caractérisé en ce que** la pièce de fixation (2) comprend des jambes de liaison (32) à l'élément de liaison (29), au moins une partie d'extrémité de chaque jambe de liaison (32) étant en vis-à-vis d'une face inférieure du corps principal (30).

15. Procédé d'installation d'un panneau contre une embase avec au moins un système de fixation (1) selon l'une quelconque des revendications 2 à 14 à un goujon fileté (34) faisant saillie de ladite embase, lequel procédé comprend les étapes successives de :
a) Mise en place du panneau contre l'embase, le goujon (34) traversant le panneau par un orifice ménagé dans ledit panneau ;
b) Mise en place du système de fixation (1) autour du goujon (34), les languettes (7, 9) de la pièce de fixation (2) étant en position contrainte et la base (3) étant plane ;
c) Translation du système de fixation (1) dans sa position contrainte le long du goujon fileté (34) jusqu'à mise en contact de la base (3) contre le panneau ;
d) Déplacement en translation de la pièce d'armement (11) en direction du panneau par rapport à la pièce de fixation (2) en appui de contact contre le panneau, les languettes (7, 9) étant dans leur position contrainte ;
e) Libération concomitante des languettes (7, 9) et actionnement de la pièce de fixation (2) vers sa position libre de fixation autour du goujon (34), durant laquelle les extrémités libres (6) des griffes (5) s'engagent dans le filetage (35) du goujon (34) et durant laquelle la base (3) passe de sa position plane à sa position non plane en exerçant une contrainte contre le panneau dirigée perpendiculairement à ladite base (3) pour supprimer tout jeu mécanique entre la pièce de fixation (2), le panneau et l'embase.

## Patentansprüche

1. Befestigungssystem (1) an einem Gewindebolzen (34), der aus einem Sockel, zum Beispiel einem Kraftfahrzeugfahrgestell, vorspringt, umfassend:
a) ein Befestigungselement (2), umfassend:
i) eine Basis (3), die mit einer Durchgangsbohrung (4) versehen ist, die ausgelegt ist, um den Gewindebolzen (34) aufzunehmen,
ii) zwei gegenüberliegende Klauen (5), die jeweils ein freies Ende (6) zum Zusammenwirken mit dem Gewinde (35) des Bolzens (34) umfassen, wobei die freien Enden (6) der zwei Klauen (5) auf beiden Seiten der Bohrung (4) einander gegenüberliegen, und
iii) zwei Haltelaschen (7), die von zwei ersten gegenüberliegenden Rändern (8) der Basis (3) vorspringen und mechanisch mit den zwei jeweiligen zusammenwirkenden Klauen (5) verbunden sind, wobei die Haltelaschen (7) elastisch zwischen einer Position, die ohne Halterung der freien Enden (6) der Klauen (5) im Gewinde (35) des Bolzens (34) ist, und einer vorgespannten Position zum Beabstanden der freien Enden (6) der Klauen (5) des Gewindes (35) des Bolzens (34) verformbar sind;
iv) zwei Spannlaschen (9), die von zwei zweiten gegenüberliegenden Rändern (10) der Basis vorspringen, die verschieden von den ersten Rändern (8) sind, wobei die Spannlaschen (9) elastisch zwischen einer freien Position, in der die Basis (3) nicht planar ist, und einer vorgespannten Position, in der die Basis (3) planar ist, verformbar sind;
b) ein Armierungselement (11) des Befestigungselements (2), umfassend:
i) eine Bohrung (14), die ausgelegt ist, um den Gewindebolzen (34) aufzunehmen, und
ii) Verriegelungsmittel vorgespannter Position (22) der Spannlaschen (9) des Befestigungselements (2);
wobei das Befestigungssystem (1) zwischen einer Position der Anordnung um den Bolzen (34), in der das Armierungselement (11) die Laschen (9) des Befestigungselements (2) in ihrer vorgespannten Position hält, und einer Befestigungsposition unter Spannung auf dem Bolzen (34) betätigt werden kann.

2. System nach dem vorhergehenden Anspruch, **dadurch gekennzeichnet, dass** das Armierungselement (11) Verriegelungsmittel in vorgespannter Position (23) der Haltelaschen (7) des Befestigungselements (2) umfasst, wobei das Befestigungssystem (1) zwischen der Position zur Anordnung um den Bolzen (34), in der das Armierungselement (11) die vier Laschen (7, 9) des Befestigungselements (2) in ihrer vorgespannten Position hält, und der Befestigungsposition unter Spannung auf dem Bolzen (34) betätigt werden kann.

3. System nach dem vorhergehenden Anspruch, **dadurch gekennzeichnet, dass** das Armierungselement (11) Verbindungsmittel (12, 13) des Befestigungselements (2) umfasst, wenn sich die Haltelaschen (7) und die Spannlaschen (9) des Befestigungselements (2) in freier Position befinden, wobei sich das Befestigungssystem (1) in seiner Befestigungsposition unter Spannung auf dem Bolzen (34) befindet.

4. System (1) nach Anspruch 2 oder 3, **dadurch gekennzeichnet, dass** jede Haltelasche (7) des Befestigungselements (2) ein Fenster (15) zur Zusammenarbeit mit dem Armierungselement (11) durch dessen Verbindungsmittel (12) umfasst.

5. System (1) nach dem vorhergehenden Anspruch, **dadurch gekennzeichnet, dass** das Fenster (15) von einem oberen Abschnitt (16) zur Zusammenarbeit mit dem Armierungselement (11) durch dessen Verriegelungsmittel in vorgespannter Position (23) der in Betracht gezogenen Haltelasche (7) begrenzt ist.

6. System (1) nach Anspruch 4 oder 5, **dadurch gekennzeichnet, dass** das Fenster (15) von einem unteren Abschnitt (17) begrenzt wird, gegenüber dem die in Betracht gezogenen Klaue (5) vorspringt.

7. System (1) nach einem der Ansprüche 1 bis 6, **dadurch gekennzeichnet, dass** das freie Ende (6) jeder Klaue (5) konkav ist.

8. System (1) nach einem der vorhergehenden Ansprüche, **dadurch gekennzeichnet, dass** jede Klaue (5) einen planaren Hauptkörper (19) umfasst, und dadurch, dass das freie Ende (6) jeder Klaue (5) mit Bezug auf eine Verlängerungsebene des Körpers (19) der Klaue (5) geneigt ist, wobei die Neigungsrichtungen der freien Enden (6) der zwei jeweiligen Klauen (5) entgegengesetzt sind.

9. System (1) nach einem der vorhergehenden Ansprüche, **dadurch gekennzeichnet, dass** jede Spannlasche (9) des Befestigungselements (2) einen Hauptkörper (20) zur Verformung der Basis (3) und einen freien Endabschnitt (21) zur Zusammenwirkung mit dem Befestigungselement (11) umfasst:
a) durch die Befestigungsmittel (22), die auf dem Armierungselement (11) vorgesehen sind, wenn sich die Spannlasche (9) in vorgespannter Position befindet, und
b) durch die Verbindungsmittel (13), die auf dem Armierungselement (11) vorgesehen sind, wenn sich die Spannlasche (9) in ihrer freien Position befindet.

10. System (1) nach einem der vorhergehenden Ansprüche, **dadurch gekennzeichnet, dass** die Basis (3) gekrümmt ist, wenn sich die Spannlaschen (9) in ihrer freien Position befinden.

11. System (1) nach einem der Ansprüche 3 bis 10, **dadurch gekennzeichnet, dass**
a) die Verbindungsmittel (12) und die Verriegelungsmittel (23) der Haltelaschen (7) durch zwei vorspringende, gegenüberliegende Anschläge (24) gebildet sind, die jeweils Folgendes umfassen:
i) eine Rückhaltefläche (12) für die in Betracht gezogene Haltelasche (7) in ihrer freien Position, die Verbindungsmittel (12) bildet, und
ii) eine Verriegelungsschulter (23), die auf einer geneigten Aufnahmefläche des oberen Abschnitts (16) der in Betracht gezogenen Haltelasche (7) in ihrer vorgespannten Position ausgebildet ist;
b) die Verbindungsmittel (13) und die Verriegelungsmittel (22) für die Spannlaschen (9) durch zwei ausgehölte einander gegenüberliegende Organe (25) gebildet sind, die jeweils Folgendes umfassen:
i) eine Verriegelungsaufnahme (22) des freien Endabschnitts der in Betracht gezogenen Spannlasche (9) in ihrer vorgespannten Position, und
(ii) einen mit einer Nut versehenen Abschnitt, der die Verbindungsmittel (13) bildet und eine Aufnahmenut (26) des Hauptkörpers (20) der Spannlasche (9) und zwei Rückhalteränder (27) des freien Endabschnitts (21) der Spannlasche (9) umfasst, die auf beiden Seiten der Nut (26) angeordnet sind, wenn sich die Spannlasche (9) in ihrer freien Position befindet.

12. System (1) nach dem vorhergehenden Anspruch, **dadurch gekennzeichnet, dass** die Verriegelungsaufnahme (22), die in jedem ausgehöhlten Organ (25) des Armierungselements (11) ausgebildet ist, durch eine geneigte Aufnahmefläche (28) des freien Endabschnitts (21) der Spannlasche (9) begrenzt ist.

13. System (1) nach einem der vorhergehenden Ansprüche, **dadurch gekennzeichnet, dass** es ein Verbindungselement (29) mit einer Platte (41) umfasst, das ausgelegt ist, um an den Sockel befestigt zu sein, wobei das Element (29) einen Hauptkörper (30), Befestigungsfüße (33) für die Platte (41) und eine Aufnahme (31) für das Verbindungs- (2) und Armierungselement (11) umfasst, die miteinander verbunden sind.

14. System (1) nach dem vorhergehenden Anspruch, **dadurch gekennzeichnet, dass** das Befestigungselement (2) Verbindungsbeine (32) mit dem Verbindungselement (29) umfasst, wobei mindestens ein Endelement jedes Verbindungsbeins (32) einer unteren Seite des Hauptkörpers (30) gegenüberliegt.

15. Verfahren zur Installation einer Platte gegen einen Sockel mit mindestens einem Befestigungssystem (1) nach einem der Ansprüche 2 bis 14 an einen Gewindebolzen (34), der von dem Sockel vorspringt, wobei das Verfahren die folgenden aufeinanderfolgenden Schritte umfasst:
a) Positionieren der Platte gegen den Sockel, wobei der Bolzen (34) durch eine Bohrung, die in der Platte ausgebildet ist, die Platte durchquert;
b) Positionieren des Befestigungssystems (1) um den Bolzen (34), wobei sich die Laschen (7, 9) des Befestigungselements (2) in ihrer vorgespannten Position befinden und der Sockel (3) planar ist;
c) Übertragen des Befestigungssystems (1) in seine vorgespannte Position entlang des Gewindebolzens (34), bis die Basis (3) gegen sie Platte in Kontakt kommt;
d) translatorisches Verschieben des Armierungselements (11) in Richtung der Platte mit Bezug auf das Befestigungselement (2), das in Kontakt gegen die Platte aufliegt, wobei sich die Laschen (7, 9) in ihrer vorgespannten Position befinden;
e) Gleichzeitiges Lösen der Laschen (7, 9) und Betätigen des Befestigungselements (2) hin zu seiner freien Befestigungsposition um den Bolzen (34), währenddessen die freien Enden (6) der Klauen (5) in das Gewinde (35) des Bolzens (34) eingreifen, und währenddessen die Basis (3) von ihrer planaren Position in ihre nicht-planare Position übergeht, indem sie eine Spannung gegen die Platte ausübt, die senkrecht zur Basis (3) gerichtet ist, um jegliches mechanisches Spiel zwischen dem Befestigungselement (2), der Platte und dem Sockel zu unterbinden.

## Claims

1. A fastening system (1) with a threaded stud (34) projecting from a base, for example a motor vehicle chassis, comprising:
a) a fastening part (2) comprising:
i) a base (3) provided with a through-opening (4) intended to receive the threaded stud (34),
ii) two opposing claws (5) each comprising a free end (6) for cooperating with the thread (35) of the stud (34), said free ends (6) of the two claws (5) are facing each other on either side of the opening (4), and
iii) two interlocking tabs (7) projecting from two first opposing edges (8) of the base (3) and mechanically connected to the respective two cooperating claws (5), said interlocking tabs (7) are elastically deformable between a free position for interlocking the free ends (6) of the claws (5) into the thread (35) of the stud (34) and a constrained position for spacing said free ends (6) of the claws (5) away from the thread (35) of the stud (34).
iv) two tension tabs (9) projecting from two second opposing edges (10) of the base distinct from the first edges (8), said tension tabs (9) are elastically deformable between a free position wherein the base (3) is non-planar and a constrained position wherein the base (3) is planar
b) a cocking part (11) of the fastening part (2) comprising:
i) an opening (14) intended to receive the threaded stud (34), and
ii) means for locking in the constrained position (22) the tension tabs (9) of the fastening part (2);
said fastening system (1) is actuatable between a position for fitting around the stud (34) wherein the cocking part (11) holds the tabs (9) of the fastening part (2) in their constrained position, and a position for fastening under tension to the stud (34).

2. The system according to the preceding claim, **characterized in that**:
the cocking part (11) comprises means for locking in the constrained position (23) the interlocking tabs (7) of the fastening part (2), said fastening system (1) is actuatable between the position for fitting around the stud (34) wherein the cocking part (11) holds the four tabs (7, 9) of the fastening part (2) in their constrained position, and the position for fastening under tension to the stud (34).

3. The system according to the preceding claim, **characterized in that** the cocking part (11) comprises connecting means (12, 13) to the fastening part (2) when the interlocking tabs (7) and the tension tabs (9) of the fastening part (2) are in the free position, the fastening system (1) being in its position for fastening under tension to the stud (34).

4. The system (1) according to claim 2 or 3, **characterized in that** each interlocking tab (7) of the fastening part (2) comprises a window (15) for cooperating with the cocking part (11) by its connecting means (12).

5. The system (1) according to the preceding claim, **characterized in that** the window (15) is delimited by an upper portion (16) for cooperating with the cocking part (11) by its means for locking in the constrained position (23) of the interlocking tab under consideration (7).

6. The system (1) according to claim 4 or 5, **characterized in that** the window (15) is delimited by an opposite lower portion (17) from which the claw (5) under consideration projects.

7. The system (1) according to any one of claims 1 to 6, **characterized in that** the free end (6) of each claw (5) is concave.

8. The system (1) according to any one of the preceding claims, **characterized in that** each claw (5) comprises a planar main body (19) and **in that** the free end (6) of each claw (5) is inclined relative to a plane of extension of the body (19) of the claw (5), the directions of inclination of the free ends (6) of the two respective claws (5) being opposite.

9. The system (1) according to any one of the preceding claims, **characterized in that** each tension tab (9) of the fastening part (2) comprises a main body (20) for deforming the base (3) and a free-end portion (21) for cooperating with the fastening part (11):
a) by the locking means (22) provided on the cocking part (11) when the tension tab (9) is in the constrained position and,
b) by the connecting means (13) provided on the cocking part (11) when the tension tab (9) is in its free position.

10. The system (1) according to any one of the preceding claims, **characterized in that** the base (3) is curved when the tension tabs (9) are in their free position.

11. The system (1) according to any one of claims 3 to 10, **characterized in that**:
a) The connecting means (12) and the locking means (23) of the interlocking tabs (7) are formed by two opposing projecting stops (24) each comprising:
i) a retaining surface (12) of the interlocking tab (7) under consideration in its free position forming the connecting means (12), and
ii) a locking shoulder (23) arranged on an inclined receiving surface of the upper portion (16) of the interlocking tab (7) under consideration in its constrained position
b) The connecting means (13) and the locking means (22) of the tension tabs (9) are formed by two opposing hollowed members (25) each comprising;
i) a locking housing (22) for the free-end portion of the tension tab (9) under consideration in its constrained position, and
ii) a grooved portion forming the connecting means (13) and comprising a housing groove (26) for the main body (20) of the tension tab (9) and two retaining edges (27) of the free-end portion (21) of the tension tab (9) arranged on either side of the groove (26) when said tension tab (9) is in its free position.

12. The system (1) according to the preceding claim, **characterized in that** the locking housing (22) arranged in each hollowed member (25) of the cocking part (11) is delimited by an inclined receiving surface (28) for the free-end portion (21) of the tension tab (9).

13. The system (1) according to any one of the preceding claims, **characterized in that** it comprises a connecting element (29) to a panel (41) intended to be fastened to the base, said element (29) comprises a main body (30), fastening legs (33) to the panel (41) and a housing (31) for the fastening (2) and cocking (11) parts connected to each other.

14. The system (1) according to the preceding claim, **characterized in that** the fastening part (2) comprises connecting legs (32) to the connecting element (29), at least an end part of each connecting leg (32) being vis-a-vis a lower face of the main body (30).

15. A method for installing a panel against a base with at least one fastening system (1) according to any one of claims 2 to 14 to a threaded stud (34) projecting from said base, said method comprising the successive steps of:
a) Placing the panel against the base, the stud (34) passing through the panel by an opening formed in said panel
b) Placing the fastening system (1) around the stud (34), the tabs (7, 9) of the fastening part (2) being in the constrained position and the base (3) being planar;
c) Translation of the fastening system (1) into its constrained position along the threaded stud (34) until the base (3) comes into contact with the panel
d) Displacement in translation of the cocking part (11) in the direction of the panel relative to the fastening part (2) in contact support against the panel, the tabs (7, 9) being in their constrained position
e) Concomitant release of the tabs (7, 9) and actuation of the fastening part (2) toward its free fastening position around the stud (34), during which the free ends (6) of the claws (5) engage in the thread (35) of the stud (34) and during which the base (3) passes from its planar position to its non-planar position while exerting a force against the panel directed perpendicularly to said base (3) to eliminate any mechanical play between the fastening part (2), the panel and the base.
